# EUROPEAN PATENT SPECIFICATION

(11) **EP 1 921 797 B1**
(45) Date of publication and mention of the grant of the patent: **13.07.2011**
(21) Application number: 07785444.6
(22) Date of filing: 23.08.2007
(51) Int. Cl.: H04L 12/24, H04L 12/56

(54) **RECOVERY METHOD AND APPARATUS FOR OPTICAL NETWORK LSP OCCURING ABNORMAL DELETE**
VERFAHREN UND VORRICHTUNG ZUR WIEDERHERSTELLUNG NACH EINEM AUSSERGEWÖHNLICHEN LÖSCHVORGANG IN EINEM LSP (LABEL-SWITCHED PATH) EINES OPTISCHEN NETZES
PROCÉDÉ ET APPAREIL DE RÉCUPÉRATION D'UN EFFACEMENT ANORMAL SURVENU DANS LE LSP D'UN RÉSEAU OPTIQUE

(30) Priority: 08.09.2006 CN 200610126879
(43) Date of publication of application: 14.05.2008
(73) Proprietor: Huawei Technologies Co., Ltd., Shenzhen, Guangdong Province 518129 (CN)
(72) Inventor: RAO, Guoyi, Shenzhen Guangdong 518129 (CN); CAI, Junzhou, Shenzhen Guangdong 518129 (CN); LI, Dong, Shenzhen Guangdong 518129 (CN)
(74) Representative: Körber, Martin Hans
(86) International application number: PCT/CN2007/070547
(87) International publication number: WO 2008/031352

(56) References cited:
- CN-A- 1 520 102
- CN-A- 1 801 802
- US-A1- 2003 210 705
- US-A1- 2004 193 724
- BERGER L ET AL: "Generalized Multi-Protocol Label Switching (GMPLS) Signaling; rfc3473.txt" IETF STANDARD, INTERNET ENGINEERING TASK FORCE, IETF, CH, 1 January 2003 (2003-01-01), XP015009256 ISSN: 0000-0003
- SU J. ET AL.: 'A Method of Restraining TP Improper Alarms when the LSP Teardown in ASON' OPTICAL COMMUNICATION TECHNOLOGY no. 7, 2005, pages 49 - 51

## Description

### Field of the Invention

The present invention relates to network management technologies, and more particularly, to a method and an apparatus for recovering after abnormal deletion of an optical network Label Switched Path (LSP).

### Background of the Invention

Automatic Switched Optical Network (ASON) is also called intelligent optical network. Different from a conventional optical network, in ASON technologies, a control plane is added to the conventional optical network. An optical network element first acquires its connection relationship with other optical network elements by use of a link discovery technology, releases its node and link state via the control plane, and receives the state released by other network elements in the network. Eventually, each optical network element has network topology information describing precise network topology. The network topology information includes information of nodes, links and resources, etc. During service configuration and scheduling, an optical network element gets a feasible path by a routing algorithm according to the network topology information, then drives nodes on the path to establish a cross connection through a signaling protocol until a target node completes the dynamical establishment of an optical connection LSP. When a network connection is dynamically established, removed, or when link resources are changed due to failures, the relevant optical network elements are required to release the updated state information of nodes and links, so as to achieve the resynchronization of the network topology information.

After an LSP is established successfully, if any optical network element on the LSP is abnormal, the established LSP is deleted. Alternatively, after an optical network element is reset and restarted, the control plane is recovered strictly according to the originally established LSP path. Due to the change of network topology or resources, the recovery of control plane fails, and thus the originally established LSP is deleted abnormally. The failed optical network element on the LSP sends a failure message to its upstream and downstream optical network elements. In response to receiving the failure message, the upstream and downstream optical network elements request their respective cross controllers for handling theirs intelligent cross connections of the LSP, and delete theirs respective control information of the LSP. After a first optical network element of the LSP deletes its control information of the LSP, the LSP is deleted abnormally.

The inventors of the present application, in the design of the present invention, disclose issues of the prior art that the ASON is unable to effectively distinguish whether an LSP deletion is a normal deletion or an abnormal deletion, and is unable to recover the LSP that is abnormally deleted.

BERGER L ET AL: "Generalized Multi-Protocol Label Switching (GMPLS) Signaling; rfc3473.txt" IETF STANDARD, INTERNET ENGINEERING TASK FORCE, IETF, CH, 1 January 2003 (2003-01-01), XP015009256 ISSN: 0000-0003 describes extensions to Multi-Protocol Label Switching (MPLS) Resource Reservation Protocol - Traffic Engineering (RSVP-TE) signaling required to support Generalized MPLS. Generalized MPLS extends the MPLS control plane to encompass time-division (e.g., SONET/SDH), wavelength (optical lambdas) and spatial switching (e.g., incoming port or fiber to outgoing port or fiber).

US 2003/0210705 A1 defines a system and methods for distributed RSVP-TE (resource reservation protocol-traffic engineering) hitless graceful restart for a MPLS (multi-protocol label switching) network. The system comprises a plurality of ingress and egress cards, each card having an MPLS control plane forwarding table for reverse and forward traffic outgoing and incoming labels for LSPs (Label Switched paths) in the MPLS network; the cards having data planes, each card data plane having said forwarding table stored thereon; and a means for providing messaging between the ingress card MPLS control plane, ingress card data plane, egress card MPLS control plane, and egress card data plane.

### Summary of the Invention

In order to overcome issues that the ASON is unable to distinguish whether an optical connection deletion is a normal deletion or an abnormal deletion as well as that connections and control information of an LSP may not be recovered when an optical connection is abnormally deleted, the present invention provides a method and an apparatus for recovering after an abnormal deletion of an optical network LSP.

A method for recovering after an abnormal deletion of an optical network LSP includes:
detecting, by a first failed node in an LSP, cross connection information about the LSP;
determining an error code according to detected failed type about the cross connection information;
requesting, by the first failed node, a first cross controller of the first failed node to handle an intelligent cross connection of the LSP in the first failed node;
sending, by the first failed node, a failure message carrying the error code along the LSP;
deleting, by the first failed node, control information about the LSP from the first failed node; and
performing, by the first failed node, reestablishment of the LSP according to the reestablishment of the LSP initiated by a head node of the LSP or performing, by the first failed node, establishment of a new LSP according to the establishment of the new LSP initiated by the head node of the LSP, in which
the head node of the LSP initiates the reestablishment of the LSP upon detecting that there is no alarm in the LSP or the establishment of the new LSP upon detecting that there is an alarm in the LSP.

An apparatus for recovering after an abnormal deletion of an optical network LSP, the apparatus includes:
a first unit configured to obtain a failure message carrying an error code indicating a failed type about cross connection information about an LSP;
a second unit configured to handle an intelligent cross connection of the LSP according to the failure message;
a third unit configured to delete control information about the LSP from a node; and
a fourth unit configured to perform reestablishment of the LSP according to the reestablishment of the LSP initiated by a head node of the LSP or perform an establishment of a new LSP according to the establishment of the new LSP initiated by the head node of the LSP, wherein the head node initiates the reestablishment of the LSP upon detecting that there is no alarm in the LSP or the establishment of the new LSP upon detecting that there is an alarm in the LSP.

An embodiment of the apparatus further includes:
a cross connection information detecting module (301) configured to detect cross connection information about the LSP when the node in the LSP has a failed;
a failure message sending module (302) configured to determine an error code according to a detected failed type about the cross connection information about the LSP and send the failure message carrying the error code along the LSP;
wherein the second unit is a cross controller enabling module (303) configured to handle the intelligent cross connection of the LSP according to the failure message or the detected failed type about the cross connection information sent by the cross connection information detecting module (301);
wherein the third unit is a control information deletion module (304) configured to delete control information about the LSP from the node after the node has a failed or the node receives the failure message; and
wherein the fourth unit is an LSP reestablishment module (305).

With the technical solution in accordance with embodiments of the present invention, it is greatly possible to guarantee service continuity or recover a service when the service is interrupted, so as to solve the problem that a service is not automatically recovered any more because a cross connection of a transport plane is lost after a network element is restarted.

### Brief description of the drawings

Figure 1 is a schematic diagram illustrating an optical network with a control plane and a network connection;
Figure 2 is a flowchart illustrating a method for recovering after abnormal deletion of an optical network LSP in accordance with an embodiment of the present invention; and
Figure 3 is a structure diagram illustrating an apparatus for recovering after abnormal deletion of an optical network LSP in accordance with an embodiment of the present invention.

### Detailed description of the invention

A further description is given to the present invention as follows in conjunction with the embodiments and accompanying drawings, but is not for use in limiting the protection scope thereof.

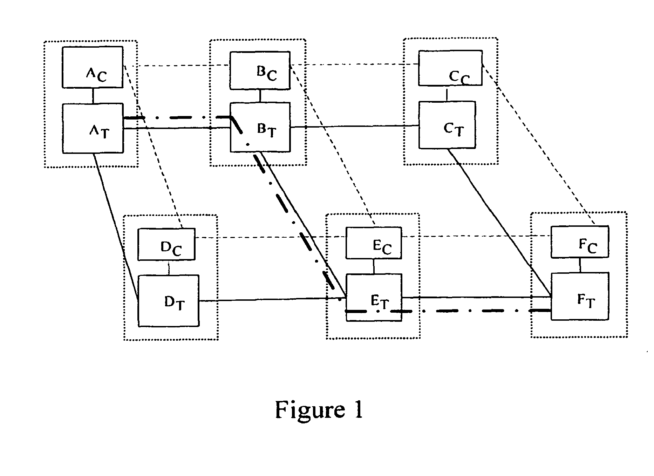

Figure 1 is a schematic diagram illustrating an optical network with a control plane and a network connection of the optical network. The optical network in Figure 1 includes six network elements A-F, and each network element includes a control plane and a transport plane. A network element is in communication with another network element via an optical link (dash dotted line). A control plane entity of a network element communicates with a control plane entity of another network element via a control channel (broken lines) which is a logical channel and has various implementation ways, for example in a Synchronous Digital Hierarchy/Synchronous Optical Network (SDH/SONET) overhead bytes may be adopted as a logical control channel. A transport plane entity of a network element communicates with a transport plane entity of another network element via a transport link (solid line). An intelligent LSP connecting A-B-E-F network elements has been established in the network. The control plane establishes a normal session with its adjacent nodes via a control channel, implements an automatic topology discovery and optical link state flooding, and establishes the same network topology information at each node. To distinguish whether an LSP is normally deleted or abnormally deleted, an error code to a failure message is added in the technical solution of the present invention to distinguish different error information using different error codes.

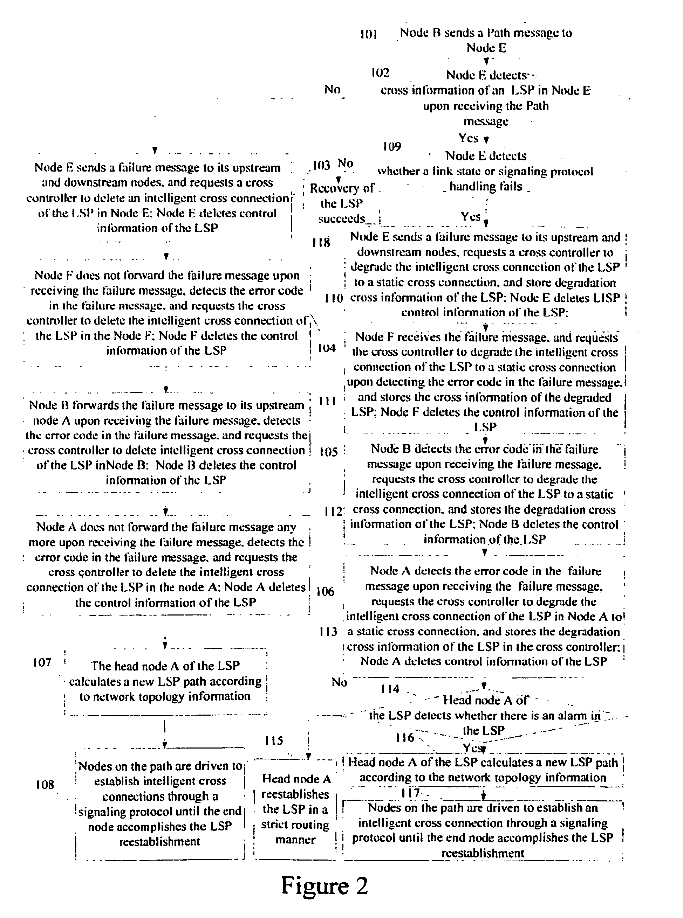

Embodiment:
As shown in Figure 1 and Figure 2, when the network operates normally, the control plane fails to be recovered after Node E is restarted, resulting in that the intelligent LSP of a service via A-B-E-F network elements is abnormally deleted. It is necessary to initiate reestablishment of the LSP to recover after the LSP deleted abnormally. The reestablishment includes the following process.
Step 101: Upstream Node B of Node E sends a Path message carrying a recovery flag to Node E.
Step 102: Upon receiving the Path message, Node E detects cross connection information of the LSP in Node E according to the recovery flag and label information carried in the Path message. If Node E does not detect the cross connection information of the LSP, it is indicated that the service via A-B-E-F network elements is lost, it is necessary to delete an intelligent cross connection and control information of the LSP in all nodes on the LSP, and thereby proceed to Step 103; if Node E detects the cross connection information of the LSP, it is indicated that the service via A-B-E-F network elements is not lost and the connection transport plane established by the service is normal but the control plane fails, and thereby proceed to Step 109.
Step 103: Because an error code is added to a failure message in accordance with the embodiment of the present invention, Node E sends a PathErr message carrying an error code indicating that cross connection information is to be deleted to upstream Node B, sends a PathTear message carrying an error code indicating cross connection information is to be deleted to downstream Node F, requests a cross controller to delete an intelligent cross connection of the LSP in Node E, and deletes the control information of the LSP in Node E.
Step 104: In response to receiving the PathTear message carrying the error code indicating that cross connection information is to be deleted, the downstream Node F detects whether it is the end node of the LSP. If it is the end node of the LSP, Node F does not forward the PathTear message; if it is not the end node of the LSP, Node F forwards the PathTear message to its downstream node until the PathTear message is forwarded to the end node of the LSP. Because Node F does not forward the PathTear message after detecting that it is the end node of the LSP, Node F requests the cross controller to delete an intelligent cross connection of the LSP in the Node F, in response to detecting that the error code in the PathTear message is an error code indicating the that cross connection information is to be deleted; Node F deletes control information of the LSP in Node F.
Step 105: In response to receiving the PathErr message carrying the error code indicating the that cross connection information is to be deleted, upstream node B detects whether it is the head node of the LSP; if it is the head node of the LSP, Node B does not forward the PathErr message; if it is not the head node of the LSP, Node B forwards the PathErr message to its upstream node until the PathErr message is forwarded to the head node of the LSP. Because Node B detects that it is not the head node of the LSP, it forwards the PathErr message to its upstream node A; in response to detecting that the error code of the PathErr message is an error code indicating the that cross connection information is to be deleted, Node B requests a cross controller to delete an intelligent cross connection of the LSP in Node B; Node B deletes control formation of the LSP in Node B.
Step 106: In response to receiving the PathErr message carrying the error code indicating the that cross connection information is to be deleted, Node A detects that it is the head node of the LSP, and does not forward the PathErr message any more; in response to detecting that the error code of PathErr message is an error code indicating the that cross connection information is to be deleted, Node A requests a cross controller to delete an intelligent cross connection of the LSP in Node A; Node A deletes control information of the LSP in Node A.
Step 107: The head node A of the LSP calculates a new LSP path according to network topology information.
Step 108: The nodes on the LSP path are driven to establish new intelligent cross connections through a signaling protocol until the destination node accomplishes establishment of a new LSP, and the procedure is over.
Step 109: Node E detects whether a link state or signaling protocol handling fails; if the link state or the signaling protocol handling fails, the error code carried by the failure message is an error code indicating degradation, and proceed to Step 110; otherwise, proceed to Step 118.
Step 110: Because the error code is added to the failure message in accordance with the embodiment of the present invention, Node E sends a PathErr message carrying an error code indicating degradation to the upstream Node B, sends a PathTear message carrying the error code indicating degradation to the downstream Node F, requests a cross controller to degrade an intelligent cross connection of the LSP in Node E to a static cross connection, and stores degradation cross connection information of the LSP in the cross controller; Node E deletes control information of the LSP in Node E.
Step 111: In response to receiving the PathTear message carrying the error code indicating degradation, the downstream Node F detects whether it is the end node of the LSP; if it is the end node of the LSP, Node F does not forward the PathTear message; if it is not the end node of LSP, Node F forwards the PathTear message to its downstream node until the PathTear message is forwarded to the end node of LSP; because Node F does not forward the PathTear message in response to detecting it is the end node of the LSP, Node F requests a cross controller to degrade an intelligent cross connection of the LSP in Node F to a static cross connection in response to detecting that the error code in the PathTear message is an error code indicating degradation, and stores degradation cross connection information of the LSP in the cross controller; Node F deletes control information of the LSP in Node F.
Step 112: In response to receiving the PathErr message carrying the error code indicating degradation, the upstream node B detects whether it is the head node of the LSP; if it is the head node of the LSP, Node B does not forward the PathErr message; if it is not the head node of the LSP, Node B forwards the PathErr message to its upstream node until the PathErr message is forwarded to the head node of the LSP. In response to detecting that it is not the head node of the LSP, Node B forwards the PathErr message to its upstream node A. In response to detecting that the error code of the PathErr message is an error code indicating degradation, Node B requests a cross controller to degrade an intelligent cross connection of the LSP in Node B to a static cross connection, and stores degradation cross connection information of the LSP in the cross controller; Node B deletes control information of the LSP in Node B.
Step 113: In response to receiving the PathErr message carrying the error code indicating degradation, Node A detects that it is the head node of the LSP, and it does not forward the PathErr message any more; in response to detecting that the error code of PathErr message is an error code indicating degradation, Node A requests a cross controller to degrade an intelligent cross connection of the LSP in Node A to a static cross connection, and stores degradation cross connection information of the LSP in the cross controller; Node A deletes control information of the LSP in Node A.
Step 114: The head node A of the LSP detects whether there is an alarm in the LSP; if there is no alarm in the LSP, it is indicated that the connection transport plane established by a service is normal but the control plane fails, and proceed to Step 115; if there is an alarm in the LSP, it is indicated that the connection transport plane and the control plane established by the service fail, it is necessary to reestablish the service, and thereby proceed to Step 116.
Step 115: The head node A of the LSP carries all HOP information and label information of the original LSP path, and reestablishes the LSP in a strict route manner and the procedure is over.
Step 116: The head node A of the LSP calculates a new LSP path according to network topology information.
Step 117: The nodes on the path are driven to establish new intelligent cross connections through the signaling protocol until the destination node finishes the establishment of a new LSP and the procedure is over.
Step 118: No process is performed and the LSP is successfully recovered.

If it is not the restarting of Node E but the expiry of the Path State Block/Reservation State Block (PSB/RSB) or the failing to handle a refreshing message that results in abnormal deletion of the LSP, because the cross connection information of the LSP in Node E is not lost in general, the method for initiating the reestablishment of the LSP is completely the same as that described by Steps 110-117 in the embodiment, which will not be further described herein.

The reestablishment of the LSP in this embodiment includes the following contents.

When the head node reestablishes an LSP in a strict routing manner, the connection transport plane established by a service is normal and is not interrupted; if the reestablishment fails, only the intelligent cross connection established during the reestablishment is degraded to a static cross connection in order that the failure of control plane does not impact the service of transport plane; when the head node calculates a new LSP path to perform establishment of a new LSP, if the establishment of the new LSP fails, the intelligent cross connection established during the establishment is deleted, but not degraded to a static cross connection.

During the reestablishment of the LSP, no matter the reestablishment of the LSP is performed in a strict routing manner or the establishment of a new LSP is performed by calculating a new LSP path, if there is a static cross connection, a cross controller is requested to upgrade the static cross connection to an intelligent cross connection; if there is no static cross connection, the cross controller is requested to establish a new intelligent cross connection. If the new LSP is established successfully, the original LSP stored in the database is deleted, and the newly established LSP is stored in the database.

Before the LSP is reestablished, an LSP reestablishment timer is first established, the duration of the LSP reestablishment timer is configured, and then LSP reestablishment is initiated; if the LSP reestablishment fails, the LSP reestablishment timer is restarted, and the LSP reestablishment is initiated again after the LSP reestablishment time expires. Repeat in such way until the LSP is successfully reestablished. The duration of the LSP reestablishment time may be an invariable duration or a variable duration, for example the duration of the LSP reestablishment timer is 10 ms for the first time, and the duration of the LSP reestablishment timer is 20 ms for the second time; the duration of LSP reestablishment timer is different each time, so as to guarantee a successful reestablishment of the LSP.

Before the LSP is established, the reestablishment of the LSP may be initiated by configuring the number of times of LSP reestablishment instead of establishing an LSP reestablishment timer; if the reestablishment of the LSP fails, the reestablishment of the LSP may be initiated again; if the number of times of LSP reestablishment exceeds the configured number of times of LSP reestablishment, it is determined that the reestablishment of the LSP fails, and the reestablishment of the LSP is not initiated again. The head node reports failure information of LSP reestablishment to the management plane, and the management plane determines whether to continuously reestablish, permanently degrade or completely delete the LSP.

During the reestablishment of the LSP, the head node calculates the new LSP path for the establishment of the new LSP; the new LSP path may be calculated by excluding the failed node or the failed link, or by excluding the node or link of which the last establishment fails, or according to an optimal path in the current network regardless of the failed node or link, so as to guarantee the newly established path accord with the original path.

The error code carried in the failure message in this embodiment may be configured, for example, error code 1 indicating degradation represents that a PSB/RSB expires, error code 2 indicating degradation represents a refresh message handling fails, and error code 3 indicating that cross connection information is to be deleted represents the deletion of cross connection information.

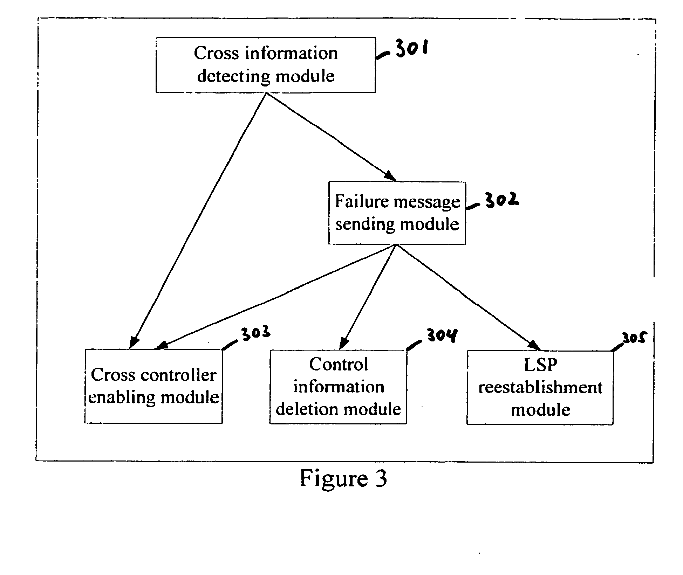

Referring to Figure 3, embodiments of the present invention further provide an apparatus for recovering after abnormal deletion of an optical network LSP, including: a cross connection information detecting module 301, a failure message sending module 302, a cross controller enabling module 303, a control information deletion module 304 and an LSP reestablishment module 305;
the cross connection information detecting module 301 is configured to detect cross connection information of the LSP in the failed node, and send the detecting result to the failure message sending module 302;
the failure message sending module 302 is configured to determine the error code corresponding to abnormal deletion by the failed node on the LSP according to the result of detecting cross connection information of the LSP sent by the cross connection information detecting module 301, and send a failure message carrying the error code along the LSP. For example, if the failed node is an intermediate node on the LSP, the failure message sending module 302 sends a failure message carrying the error code indicating the degradation or deletion of the cross connection information to its upstream and downstream nodes until the failure message arrives at the head node and the end node of the LSP; if the failed node is the head node of the LSP, the failure message sending module 302 sends a failure message carrying the error code indicating degradation or deletion of the cross connection information to its downstream node; if the failed node is the end node of the LSP, the failure message sending module 302 sends a failure message carrying the error code indicating degradation or deletion of the cross connection information to its upstream node;
the cross controller enabling module 303 is configured to degrade or delete an intelligent cross connection of the LSP in the node on the LSP according to cross connection information of the LSP in the node on the LSP sent by the cross connection information detecting module 301 or the failure message sent by the failure message sending module 302; the cross controller enabling module 303 further includes a cross connection information storing unit, configured to store the cross connection information of the LSP in a cross controller in response to degrading the intelligent cross connection of the LSP;
the control information deletion module 304 is configured to delete control information of the LSP in the node on the LSP by the LSP node after the node fails or receives the failure message sent by the failure message sending module 302;
the LSP reestablishment module 305 is configured, in the head node of the LSP, to initiate the reestablishment of the LSP or the establishment of a new LSP according to the error code; for example after the head node receives a failure message sent by the failure message sending module 302, the LSP reestablishment module 305 initiates the reestablishment of the LSP or the establishment of the new LSP according to the error code carried by the failure message; for another example, the LSP reestablishment module 305 initiates the reestablishment of LSP or the establishment of the new LSP according to the error code corresponding to the abnormal deletion determined by the failure message sending module 302; the LSP reestablishment module 305 is further configured, in a node of the LSP, to perform reestablishment of the LSP according to the reestablishment of the LSP initiated by a head node of the LSP or perform establishment of the new LSP according to the establishment of the new LSP initiated by the head node of the LSP.

The apparatus further includes an alarm detecting unit, configured to detect whether there is an alarm in the LSP by the head node of the LSP; if there is an alarm in the LSP, the head node of the LSP calculates a new LSP path and initiates the establishment of the new LSP; if there is no alarm in the LSP, the head node of the LSP initiates the reestablishment of the LSP in a strict routing manner.

The LSP reestablishment module 305, which is a path calculation module in the head node of the LSP, is configured to calculate the new LSP path and initiate the establishment of the new LSP.

The above is only one of the embodiments of the present invention. The protection scope of the present invention, however, is not limited to the above description. Any change or substitution, within the technical scope disclosed by the present invention, easily occurring to those skilled in the art should be covered by the protection scope of the present invention.

## Claims

1. A method for recovering after an abnormal deletion of an optical network Label Switched Path, LSP, in a node (301, 302, 303, 304, 305), **characterized in that** the method comprises:
detecting, by a first failed node (301) in an LSP, cross connection information about the LSP;
determining an error code according to a result of the detecting;
requesting, by the first failed node (301), a first cross controller (303) of the first failed node to handle an intelligent cross connection of the LSP in the first failed node (301),
sending, by the first failed node (301, 302), a failure message carrying the error code along the LSP;
deleting, by the first failed node (301, 304), control information about the LSP from the first failed node; and
performing, by the first failed node (301, 305), reestablishment of the LSP according to the reestablishment of the LSP initiated by a head node of the LSP or performing, by the first failed node, establishment of a new LSP according to the establishment of the new LSP initiated by the head node of the LSP, wherein
the head node of the LSP initiates the reestablishment of the LSP upon detecting that there is no alarm in the LSP or the establishment of the new LSP upon detecting that there is an alarm in the LSP.

2. The method of Claim 1, wherein the process of detecting by the first failed node in the LSP the cross connection information about the LSP comprises: detecting by the first failed node whether there is the cross connection information about the LSP.

3. The method of Claim 1, wherein the error code comprises: an error code indicating that the intelligent cross connection of the LSP is to be degraded to a static cross connection and an error code indicating that the cross connection information about the LSP is to be deleted from the first failed node.

4. The method of Claim 1, wherein the process of requesting by the first failed node the first cross controller of the first failed node to handle the intelligent cross connection of the LSP in the first failed node comprises:
requesting, by the first failed node, the first cross controller of the first failed node to degrade the intelligent cross connection of the LSP in the first failed node to a static cross connection, and store degradation cross connection information about the LSP in the first cross controller of the first failed node; or,
requesting, by the first failed node, the first cross controller of the first failed node to delete the intelligent cross connection of the LSP in the first failed node.

5. The method of Claim 1, further comprising:
obtaining, by a second node in the LSP, the failure message carrying the error code;
requesting, by the second node, a second cross controller of the second node to handle an intelligent cross connection of the LSP in the second node;
deleting, by the second node, control information about the LSP from the second node; and
performing, by the second node, the reestablishment of the LSP according to the reestablishment of the LSP initiated by the head node of the LSP or performing, by the second node, the establishment of the new LSP according to the establishment of the new LSP initiated by the head node of the LSP.

6. The method of Claim 5, wherein the process of requesting by the second node the second cross controller of the second node to handle the intelligent cross connection of the LSP in the second node comprises:
requesting the second cross controller of the second node to degrade the intelligent cross connection of the LSP in the second node to a static cross connection, and store degradation cross connection information about the LSP in the second cross controller; or,
requesting the second cross controller of the second node to delete the intelligent cross connection of the LSP from the second node.

7. The method of Claim 1, wherein the process of the head node of the LSP initiating the reestablishment of the LSP upon detecting that there is no alarm in the LSP comprises:
initiating the reestablishment of the LSP in a strict routing manner if there is no alarm in the LSP (115).

8. The method of Claim 7, further comprising:
degrading the intelligent cross connection established during the reestablishment of the LSP to a static cross connection in the case that the reestablishment of the LSP fails.

9. The method of Claim 1, wherein the process of the head node of the LSP initiating the establishment of the new LSP upon detecting that there is an alarm in the LSP comprises:
calculating a new LSP path according to network topology information upon detecting that there is an alarm in the LSP (107, 116), and initiating the establishment of the new LSP.

10. The method of Claim 9, wherein the process of calculating the new LSP path comprises:
calculating a new LSP path excluding the failed node or a failed link of the LSP; or
calculating a new LSP path excluding a node or a link of which the reestablishment fails; or
calculating a new LSP path according to an optimal path of network.

11. The method of Claim 9, further comprising:
deleting the intelligent cross connection when the establishment of the new LSP fails.

12. The method of Claim 5 or 9, wherein the reestablishment of the LSP comprises:
initiating the reestablishment of the LSP periodically according to a configured time interval until the reestablishment of the LSP succeeds; or
initiating the reestablishment of the LSP according to the configured number of times of LSP reestablishment; determining that reestablishment of the LSP fails if the number of times performing the reestablishment of the LSP exceeds the configured number of times of LSP reestablishment; reporting information about LSP reestablishment failure to a management plane; determining whether to continuously reestablish, permanently degrade or completely delete the LSP by the management plane.

13. The method of Claim 5 or 9, wherein during the reestablishment of the LSP or the establishment of the new LSP, if there is a static cross connection in the first or second cross controller, the first or second cross controller upgrades the static cross connection to a new intelligent cross connection; if there is no static cross connection in the first or second cross controller, the first or second cross controller creates a new intelligent cross connection.

14. An apparatus for recovering after an abnormal deletion of an optical network Label Switched Path, LSP, the apparatus comprising:
a first unit (302, 303) configured to obtain a failure message carrying an error code indicating a failed type about cross connection information about an LSP;
a second unit (303) configured to handle an intelligent cross connection of the LSP according to the failure message;
a third unit (304) configured to delete control information about the LSP from a node; and
a fourth unit (305) configured to perform reestablishment of the LSP according to the reestablishment of the LSP initiated by a head node of the LSP or perform an establishment of a new LSP according to the establishment of the new LSP initiated by the head node of the LSP, wherein the head node initiates the reestablishment of the LSP upon detecting that there is no alarm in the LSP or the establishment of the new LSP upon detecting that there is an alarm in the LSP.

15. The apparatus of claim 14, further comprising:
a cross connection information detecting module (301) configured to detect cross connection information about the LSP when the node in the LSP has failed; and
wherein the first unit (302) is configured to determine an error code according to a detected failed type about the cross connection information about the LSP and send the failure message carrying the error code along the LSP; and
wherein the second unit is a cross controller enabling module (303) configured to handle the intelligent cross connection of the LSP according to the failure message or the detected failed type about the cross connection information sent by the cross connection information detecting module (301); and
wherein the third unit is a control information deletion module (304) configured to delete control information about the LSP from the node after the node has failed or the node receives the failure message; and
wherein the fourth unit is an LSP reestablishment module (305).

16. The apparatus of Claim 15, wherein the error code comprises: an error code indicating that the intelligent cross connection of the LSP is to be degraded to a static cross connection and an error code indicating that the cross connection information about the LSP is to be deleted from the node.

17. The apparatus of Claim 15, wherein:
the cross controller enabling module (303) is further configured to handle an intelligent cross connection of the LSP according to a failure message carrying an error code determined by another failed node in the LSP; and
the control information deletion module (304) is further configured to delete control information about the LSP from the node upon receiving the failure message carrying the error code determined by another failed node on the LSP.

18. The apparatus of Claim 15 or 17, wherein the cross controller enabling module (303) further comprises:
a first sub-unit configured to request a cross controller of the node to degrade the intelligent cross connection of the LSP to a static cross connection, and store degradation cross connection information about the LSP in the cross controller; and/or
a second sub-unit configured to request the cross controller of the node to delete the intelligent cross connection of the LSP from the node.

## Patentansprüche

1. Verfahren zum Wiedererlangen nach einer anomalen Löschung eines etikettvermittelten Pfades LSP eines optischen Netzes in einem Knoten (301, 302, 303, 304, 305), **dadurch gekennzeichnet, dass** das Verfahren enthält:
Detektieren von Querverbindungsinformationen über den LSP durch einen ersten ausgefallenen Knoten (301) in einem LSP;
Bestimmen eines Fehlercodes gemäß einem Ergebnis des Detektierens;
Anfordern, dass ein erster Quercontroller (303) des ersten ausgefallenen Knotens eine intelligente Querverbindung des LSP im ersten ausgefallenen Knoten (301) bearbeitet, durch den ersten ausgefallenen Knoten (301),
Senden einer Ausfallmeldung, die den Fehlercode überträgt, entlang des LSP durch den ersten ausgefallenen Knoten (301, 302);
Löschen von Steuerinformationen über den LSP aus dem ersten ausgefallenen Knoten durch den ersten ausgefallenen Knoten (301, 304); und
Durchführen einer Wiederherstellung des LSP gemäß der Wiederherstellung des LSP, die durch einen Kopfknoten des LSP eingeleitet wird, durch den ersten ausgefallenen Knoten (301, 305), oder Durchführen eines Aufbaus eines neuen LSP gemäß dem Aufbau des neuen LSP, der durch den Kopfknoten des LSP eingeleitet wird,
durch den ersten ausgefallenen Knoten, wobei
der Kopfknoten des LSP die Wiederherstellung des LSP bei der Detektion, dass kein Alarm im LSP besteht, oder den Aufbau des neuen LSP bei der Detektion, dass ein Alarm im LSP besteht, einleitet.

2. Verfahren nach Anspruch 1, wobei der Prozess des Detektierens der Querverbindungsinformationen über den LSP durch den ersten ausgefallenen Knoten im LSP enthält: Detektieren, ob die Querverbindungsinformationen über den LSP vorliegen, durch den ersten ausgefallenen Knoten.

3. Verfahren nach Anspruch 1, wobei der Fehlercode enthält: einen Fehlercode, der angibt, dass die intelligente Querverbindung des LSP auf eine statische Querverbindung herabgesetzt werden soll, und einen Fehlercode, der angibt, dass die Querverbindungsinformationen über den LSP aus dem ersten ausgefallenen Knoten gelöscht werden sollen.

4. Verfahren nach Anspruch 1, wobei der Prozess des Anforderns, dass der erste Quercontroller des ersten ausgefallenen Knotens die intelligente Querverbindung des LSP im ersten ausgefallenen Knoten bearbeitet, durch den ersten ausgefallenen Knoten enthält:
Anfordern, dass der erste Quercontroller des ersten ausgefallenen Knotens die intelligente Querverbindung des LSP im ersten ausgefallenen Knoten auf eine statische Querverbindung herabsetzt und Herabsetzungsquerverbindungs-Informationen über den LSP im ersten Quercontroller des ersten ausgefallenen Knotens speichert, durch den ersten ausgefallenen Knoten; oder
Anfordern, dass der erste Quercontroller des ersten ausgefallenen Knotens die intelligente Querverbindung des LSP im ersten ausgefallenen Knoten löscht, durch den ersten ausgefallenen Knoten.

5. Verfahren nach Anspruch 1, das ferner enthält:
Erhalten der Ausfallmeldung, die den Fehlercode überträgt, durch einen zweiten Knoten im LSP;
Anfordern, dass ein zweiter Quercontroller des zweiten Knotens eine intelligente Querverbindung des LSP im zweiten Knoten bearbeitet, durch den zweiten Knoten;
Löschen von Steuerinformationen über den LSP aus dem zweiten Knoten durch den zweiten Knoten; und
Durchführen der Wiederherstellung des LSP gemäß der Wiederherstellung des LSP, die durch den Kopfknoten des LSP eingeleitet wird, durch den zweiten Knoten oder Durchführen des Aufbaus des neuen LSP gemäß dem Aufbau des neuen LSP, der durch den Kopfknoten des LSP eingeleitet wird, durch den zweiten Knoten.

6. Verfahren nach Anspruch 5, wobei der Prozess des Anforderns, dass der zweite Quercontroller des zweiten Knotens die intelligente Querverbindung des LSP im zweiten Knoten bearbeitet, durch den zweiten Knoten enthält:
Anfordern, dass der zweite Quercontroller des zweiten Knotens die intelligente Querverbindung des LSP im zweiten Knoten auf eine statische Querverbindung herabsetzt und Herabsetzungsquerverbindungs-Informationen über den LSP im zweiten Quercontroller speichert; oder
Anfordern, dass der zweite Quercontroller des zweiten Knotens die intelligente Querverbindung des LSP aus dem zweiten Knoten löscht.

7. Verfahren nach Anspruch 1, wobei der Prozess des Kopfknotens des LSP, der die Wiederherstellung des LSP beim Detektieren, dass kein Alarm im LSP besteht, einleitet, enthält:
Einleiten der Wiederherstellung des LSP in einer strengen Leitweglenkungsweise, wenn kein Alarm im LSP besteht (115).

8. Verfahren nach Anspruch 7, das ferner enthält:
Herabsetzen der intelligenten Querverbindung, die während der Wiederherstellung des LSP aufgebaut wird, auf eine statische Querverbindung, falls die Wiederherstellung des LSP misslingt.

9. Verfahren nach Anspruch 1, wobei der Prozess des Kopfknotens des LSP, der den Aufbau des neuen LSP beim Detektieren, dass ein Alarm im LSP besteht, einleitet, enthält:
Berechnen eines neuen LSP-Pfades gemäß Netztopologieinformationen beim Detektieren, dass ein Alarm im LSP besteht (107, 116), und Einleiten des Aufbaus des neuen LSP.

10. Verfahren nach Anspruch 9, wobei der Prozess des Berechnens des neuen LSP-Pfades enthält:
Berechnen eines neuen LSP-Pfades ausschließlich des ausgefallenen Knotens oder einer ausgefallenen Verbindung des LSP; oder
Berechnen eines neuen LSP-Pfades ausschließlich eines Knotens oder einer Verbindung, dessen bzw. deren Wiederherstellung misslingt; oder
Berechnen eines neuen LSP-Pfades gemäß einem optimalen Pfad des Netzes.

11. Verfahren nach Anspruch 9, das ferner enthält:
Löschen der intelligenten Querverbindung, wenn der Aufbau des neuen LSP misslingt.

12. Verfahren nach Anspruch 5 oder 9, wobei die Wiederherstellung des LSP enthält:
periodisches Einleiten der Wiederherstellung des LSP gemäß einem konfigurierten Zeitintervall, bis die Wiederherstellung des LSP gelingt; oder
Einleiten der Wiederherstellung des LSP gemäß der konfigurierten Anzahl von Malen der LSP-Wiederherstellung; Bestimmen, dass die Wiederherstellung des LSP misslingt, wenn die Anzahl von Malen, die die Wiederherstellung des LSP durchgeführt wird, die konfigurierte Anzahl von Malen der LSP-Wiederherstellung übersteigt; Melden von Informationen über den LSP-Wiederherstellungs-Misserfolg an eine Managementebene; Bestimmen, ob der LSP kontinuierlich wiederhergestellt, dauerhaft herabgesetzt oder vollständig gelöscht werden soll, durch die Managementebene.

13. Verfahren nach Anspruch 5 oder 9, wobei während der Wiederherstellung des LSP oder des Aufbaus des neuen LSP, wenn eine statische Querverbindung im ersten oder zweiten Quercontroller besteht, der erste oder der zweite Quercontroller die statische Querverbindung auf eine neue intelligente Querverbindung hochstuft; wenn keine statische Querverbindung im ersten oder zweiten Quercontroller besteht, der erste oder zweite Quercontroller eine neue intelligente Querverbindung erzeugt.

14. Vorrichtung zum Wiedererlangen nach einer anomalen Löschung eines etikettvermittelten Pfades LSP eines optischen Netzes, wobei die Vorrichtung enthält:
eine erste Einheit (302, 303), die dazu konfiguriert ist, eine Ausfallmeldung zu erhalten, die einen Fehlercode überträgt, der einen ausgefallenen Typ über Querverbindungsinformationen über einen LSP angibt;
eine zweite Einheit (303), die dazu konfiguriert ist, eine intelligente Querverbindung des LSP gemäß der Ausfallmeldung zu bearbeiten;
eine dritte Einheit (304), die dazu konfiguriert ist, Steuerinformationen über den LSP aus einem Knoten zu löschen; und
eine vierte Einheit (305), die dazu konfiguriert ist, eine Wiederherstellung des LSP gemäß der Wiederherstellung des LSP, die durch einen Kopfknoten des LSP eingeleitet wird, durchzuführen oder einen Aufbau eines neuen LSP gemäß dem Aufbau des neuen LSP, der durch den Kopfknoten des LSP eingeleitet wird, durchzuführen, wobei der Kopfknoten die Wiederherstellung des LSP beim Detektieren, dass kein Alarm im LSP besteht, oder den Aufbau des neuen LSP beim Detektieren, dass ein Alarm im LSP besteht, einleitet.

15. Vorrichtung nach Anspruch 14, die ferner enthält:
ein Querverbindungsinformations-Detektionsmodul (301), das dazu konfiguriert ist, Querverbindungsinformationen über den LSP zu detektieren, wenn der Knoten im LSP ausgefallen ist; und
wobei die erste Einheit (302) dazu konfiguriert ist, einen Fehlercode gemäß einem detektierten ausgefallenen Typ über die Querverbindungsinformationen über den LSP zu bestimmen und die Ausfallmeldung, die den Fehlercode überträgt, entlang des LSP zu senden; und
wobei die zweite Einheit ein Quercontroller-Aktivierungsmodul (303) ist, das dazu konfiguriert ist, die intelligente Querverbindung des LSP gemäß der Ausfallmeldung oder dem detektierten ausgefallenen Typ über die Querverbindungsinformationen,
die durch das Querverbindungsinformations-Detektionsmodul (301) gesendet werden, zu bearbeiten; und
wobei die dritte Einheit ein Steuerinformations-Löschmodul (304) ist, das dazu konfiguriert ist, Steuerinformationen über den LSP aus dem Knoten zu löschen, nachdem der Knoten ausgefallen ist oder der Knoten die Ausfallmeldung empfängt; und wobei die vierte Einheit ein LSP-Wiederherstellungsmodul (305) ist.

16. Vorrichtung nach Anspruch 15, wobei der Fehlercode enthält: einen Fehlercode, der angibt, dass die intelligente Querverbindung des LSP auf eine statische Querverbindung herabgesetzt werden soll, und einen Fehlercode, der angibt, dass die Querverbindungsinformationen über den LSP aus dem Knoten gelöscht werden sollen.

17. Vorrichtung nach Anspruch 15, wobei:
das Quercontroller-Aktivierungsmodul (303) ferner dazu konfiguriert ist, eine intelligente Querverbindung des LSP gemäß einer Ausfallmeldung, die einen durch einen anderen ausgefallenen Knoten im LSP bestimmten Fehlercode überträgt, zu bearbeiten; und
das Steuerinformations-Löschmodul (304) ferner dazu konfiguriert ist, Steuerinformationen über den LSP aus dem Knoten beim Empfangen der Ausfallmeldung, die den durch einen anderen ausgefallenen Knoten im LSP bestimmten Fehlercode überträgt, zu löschen.

18. Vorrichtung nach Anspruch 15 oder 17, wobei das Quercontroller-Freigabemodul (303) ferner enthält:
eine erste Untereinheit, die dazu konfiguriert ist, anzufordern, dass ein Quercontroller des Knotens die intelligente Querverbindung des LSP auf eine statische Querverbindung herabsetzt und Herabsetzungsquerverbindungs-Informationen über den LSP im Quercontroller speichert; und/oder
eine zweite Untereinheit, die dazu konfiguriert ist, anzufordern, dass der Quercontroller des Knotens die intelligente Querverbindung des LSP aus dem Knoten löscht.

## Revendications

1. Procédé de récupération après une suppression anormale d'un Chemin Commuté par Etiquette, LSP, de réseau optique dans un noeud (301, 302, 303, 304, 305), **caractérisé en ce que** le procédé comprend :
la détection, par un premier noeud défaillant (301) dans un LSP, d'informations d'interconnexion relatives au LSP ;
la détermination d'un code d'erreur en fonction d'un résultat de la détection ;
la demande, par le premier noeud défaillant (301), à un premier inter-contrôleur (303) du premier noeud défaillant de prendre en charge une interconnexion intelligente du LSP dans le premier noeud défaillant (301),
l'envoi, par le premier noeud défaillant (301, 302), d'un message de défaillance portant le code d'erreur le long du LSP ;
la suppression, par le premier noeud défaillant (301, 304), d'informations de commande relatives au LSP provenant du premier noeud défaillant ; et
l'exécution, par le premier noeud défaillant (301, 305), du rétablissement du LSP en fonction du rétablissement du LSP lancé par un noeud de tête du LSP ou l'exécution, par le premier noeud défaillant, de l'établissement d'un nouveau LSP en fonction de l'établissement du nouveau LSP lancé par le noeud de tête du LSP, dans lequel le noeud de tête du LSP lance le rétablissement du LSP à la détection d'une absence d'alarme dans le LSP ou l'établissement du nouveau LSP à la détection d'une présence d'alarme dans le LSP.

2. Procédé selon la revendication 1, dans lequel le processus de détection par le premier noeud défaillant dans le LSP des informations d'interconnexion relatives au LSP comprend : la détection par le premier noeud défaillant de l'existence ou non des informations d'interconnexion relatives au LSP.

3. Procédé selon la revendication 1, dans lequel le code d'erreur comprend : un code d'erreur indiquant que l'interconnexion intelligente du LSP doit être dégradée à une interconnexion statique et un code d'erreur indiquant que les informations d'interconnexion relatives au LSP doivent être supprimées du premier noeud défaillant.

4. Procédé selon la revendication 1, dans lequel le processus de demande par le premier noeud défaillant au premier inter-contrôleur du premier noeud défaillant de prendre en charge l'interconnexion intelligente du LSP dans le premier noeud défaillant comprend :
la demande, par le premier noeud défaillant, au premier inter-contrôleur du premier noeud défaillant de dégrader l'interconnexion intelligente du LSP dans le premier noeud défaillant à une interconnexion statique, et de stocker des informations d'interconnexion de déclassement relatives au LSP dans le premier inter-contrôleur du premier noeud défaillant ; ou
la demande, par le premier noeud défaillant, au premier inter-contrôleur du premier noeud défaillant, de supprimer l'interconnexion intelligente du LSP dans le premier noeud défaillant.

5. Procédé selon la revendication 1, comprenant en outre :
l'obtention, par un second noeud dans le LSP, du message de défaillance portant le code d'erreur ;
la demande, par le second noeud, à un second inter-contrôleur du second noeud de prendre en charge une interconnexion intelligente du LSP dans le second noeud ;
la suppression, par le second noeud, d'informations de commande relatives au LSP provenant du second noeud ; et
l'exécution, par le second noeud, du rétablissement du LSP en fonction du rétablissement du LSP lancé par le noeud de tête du LSP ou l'exécution, par le second noeud, de l'établissement du nouveau LSP en fonction de l'établissement du nouveau LSP lancé par le noeud de tête du LSP.

6. Procédé selon la revendication 5, dans lequel le processus de demande par le second noeud au second inter-contrôleur du second noeud de prendre en charge l'interconnexion intelligente du LSP dans le second noeud comprend :
la demande au second inter-contrôleur du second noeud de dégrader l'interconnexion intelligente du LSP dans le second noeud à une interconnexion statique, et de stocker des informations d'interconnexion de déclassement relatives au LSP dans le second inter-contrôleur ; ou
la demande au second inter-contrôleur du second noeud de supprimer l'interconnexion intelligente du LSP provenant du second noeud.

7. Procédé selon la revendication 1, dans lequel le processus de lancement par le noeud de tête du LSP du rétablissement du LSP à la détection d'une absence d'alarme dans le LSP comprend :
le lancement du rétablissement du LSP dans un mode de routage strict en l'absence d'alarme dans le LSP (115).

8. Procédé selon la revendication 7, comprenant en outre :
la dégradation de l'interconnexion intelligente établie durant le rétablissement du LSP en une interconnexion statique en cas d'échec du rétablissement du LSP.

9. Procédé selon la revendication 1, dans lequel le processus de lancement de l'établissement du nouveau LSP par le noeud de tête du LSP à la détection d'une présence d'alarme dans le LSP comprend :
le calcul d'un nouveau chemin LSP en fonction d'informations de topologie de réseau à la détection d'une présence d'alarme dans le LSP (107, 116) et le lancement de l'établissement du nouveau LSP.

10. Procédé selon la revendication 9, dans lequel le processus de calcul du nouveau chemin LSP comprend :
le calcul d'un nouveau chemin LSP excluant le noeud défaillant ou une liaison défaillante du LSP ; ou
le calcul d'un nouveau chemin LSP excluant un noeud ou une liaison dont le rétablissement échoue ; ou
le calcul d'un nouveau chemin LSP en fonction d'un chemin optimal de réseau.

11. Procédé selon la revendication 9, comprenant en outre :
la suppression de l'interconnexion intelligente quand l'établissement du nouveau LSP échoue.

12. Procédé selon la revendication 5 ou 9, dans lequel le rétablissement du LSP comprend :
le lancement périodique du rétablissement du LSP en fonction d'un intervalle de temps configuré jusqu'à ce que le rétablissement du LSP réussisse ; ou
le lancement du rétablissement du LSP en fonction du nombre configuré de rétablissements du LSP ; la détermination du fait que le rétablissement du LSP échoue si le nombre de rétablissements du LSP effectués dépasse le nombre configuré de rétablissements du LSP ; la communication d'informations relatives à l'échec de rétablissement du LSP à un plan de gestion ; la détermination s'il convient ou non de rétablir continuellement, de dégrader définitivement ou de supprimer complètement le LSP par le plan de gestion.

13. Procédé selon la revendication 5 ou 9, dans lequel durant le rétablissement du LSP ou l'établissement du nouveau LSP, s'il existe une interconnexion statique dans le premier ou le second inter-contrôleur, le premier ou le second inter-contrôleur améliore l'interconnexion statique à une nouvelle interconnexion intelligente ; s'il n'existe pas d'interconnexion statique dans le premier ou le second inter-contrôleur, le premier ou le second inter-contrôleur crée une nouvelle interconnexion intelligente.

14. Appareil de récupération après une suppression anormale d'un Chemin Commuté par Etiquette, LSP, d'un réseau optique, l'appareil comprenant :
une première unité (302, 303) configurée pour obtenir un message de défaillance portant un code d'erreur indiquant un type de défaillance relatif à des informations d'interconnexion relatives au LSP ;
une deuxième unité (303) configurée pour prendre en charge une interconnexion intelligente du LSP en fonction du message de défaillance ;
une troisième unité (304) configurée pour supprimer des informations de commande relatives au LSP provenant d'un noeud ; et
une quatrième unité (305) configurée pour exécuter un rétablissement du LSP en fonction du rétablissement du LSP lancé par un noeud de tête du LSP ou exécuter un établissement d'un nouveau LSP en fonction de l'établissement du nouveau LSP lancé par le noeud de tête du LSP, le noeud de tête lançant le rétablissement du LSP à la détection d'une absence d'alarme dans le LSP ou l'établissement du nouveau LSP à la détection d'une présence d'alarme dans le LSP.

15. Appareil selon la revendication 14, comprenant en outre :
un module de détection d'informations d'interconnexion (301) configuré pour détecter des informations d'interconnexion relatives au LSP quand le noeud dans le LSP a défailli ; et
dans lequel la première unité (302) est configurée pour déterminer un code d'erreur en fonction d'un type de défaillance détecté relatif aux informations d'interconnexion relatives au LSP et envoyer le message de défaillance portant le code d'erreur le long du LSP ; et
dans lequel la deuxième unité est un module d'activation d'inter-contrôleur (303) configuré pour prendre en charge l'interconnexion intelligente du LSP en fonction du message de défaillance ou du type de défaillance détecté relatif aux informations d'interconnexion envoyées par le module de détection d'informations d'interconnexion (301) ; et
dans lequel la troisième unité est un module de suppression d'informations de commande (304) configuré pour supprimer des informations de commande relatives au LSP provenant du noeud après que le noeud a défailli ou que le noeud reçoit le message de défaillance ; et
dans lequel la quatrième unité est un module de rétablissement de LSP (305).

16. Appareil selon la revendication 15, dans lequel le code d'erreur comprend : un code d'erreur indiquant que l'interconnexion intelligente du LSP doit être dégradée à une interconnexion statique et un code d'erreur indiquant que les informations d'interconnexion relatives au LSP doivent être supprimées du noeud.

17. Appareil selon la revendication 15, dans lequel :
le module d'activation d'inter-contrôleur (303) est configuré en outre pour prendre en charge une interconnexion intelligente du LSP en fonction d'un message de défaillance portant un code d'erreur déterminé par un autre noeud défaillant dans le LSP ; et
le module de suppression d'informations de commande (304) est configuré en outre pour supprimer des informations de commande relatives au LSP du noeud à la réception du message de défaillance portant le code d'erreur déterminé par un autre noeud défaillant sur le LSP.

18. Appareil selon la revendication 15 ou 17, dans lequel le module d'activation d'inter-contrôleur (303) comprend en outre :
une première sous-unité configurée pour demander à un inter-contrôleur du noeud de dégrader l'interconnexion intelligente du LSP à une interconnexion statique, et de stocker des informations d'interconnexion de déclassement relatives au LSP dans l'inter-contrôleur ; et/ou
une seconde sous-unité configurée pour demander à l'inter-contrôleur du noeud de supprimer l'interconnexion intelligente du LSP provenant du noeud.
